# EUROPEAN PATENT SPECIFICATION

(11) **EP 2 701 919 B1**
(45) Date of publication and mention of the grant of the patent: **01.07.2020**
(21) Application number: 12777756.3
(22) Date of filing: 19.04.2012
(51) Int. Cl.: G03G 15/00, H04N 1/00

(54) **IMAGE FORMING APPARATUS, CONTROLLING METHOD OF IMAGE FORMING APPARATUS, AND PROGRAM**
BILDERZEUGUNGSVORRICHTUNG, STEUERUNGSVERFAHREN FÜR DIE BILDERZEUGUNGSVORRICHTUNG UND PROGRAMM
APPAREIL DE FORMATION D'IMAGES, PROCÉDÉ DE COMMANDE D'APPAREIL DE FORMATION D'IMAGES ET PROGRAMME

(30) Priority: 25.04.2011 JP 2011097258
(43) Date of publication of application: 05.03.2014
(73) Proprietor: Canon Kabushiki Kaisha, Tokyo 146-8501 (JP)
(72) Inventor: YAMASAKI, Shozo, Tokyo 146-8501 (JP)
(74) Representative: TBK
(86) International application number: PCT/JP2012/061164
(87) International publication number: WO 2012/147827

(56) References cited:
- JP-A- 2011 039 956
- US-A1- 2011 007 349
- US-A1- 2011 083 027

## Description

The present invention relates to an image forming apparatus, a controlling method of the image forming apparatus, and a program for performing the controlling method of the image forming apparatus.

### Background Art

Conventionally, there has been known an image forming apparatus such as a copying machine, a printer or the like which has, in order to achieve power saving of the apparatus as a whole, an automatic off driving circuit for automatically turning off a power-supply switch when the apparatus is not operated or handled for a given time.

Here, the power-supply switch provided in the image forming apparatus like this has a mechanical relay. In such circumstances, when the mechanical relay is driven by outside signal controlling in a state that the power-supply switch is on, it is possible to perform automatic off driving for turning off the power-supply switch.

In the image forming apparatus which has the above automatic off driving circuit, in order to suppress power consumption of the apparatus, it is desirable to frequently turn off the power-supply switch by performing the automatic off driving when the image forming apparatus is not used.

However, since the mechanical relay has a lifetime, the number of times of controlling the mechanical relay is naturally limited due to its lifetime. More specifically, the lifetime has been defined for each component as the number of times of off/on of the power-supply switch.

When the number of times of off/on of the power-supply switch in the frequently performed automatic off driving resultingly exceeds the number of times of off/on defined as the lifetime, there is a possibility that the contact of the power-supply switch deteriorates and thus the power-supply switch itself breaks down.

JP 2009-130824 A proposes a method which is used to, in an image forming apparatus of performing automatic off controlling for a power supply by using an element such as a mechanical relay or the like of which the number of times of controlling has been limited as a lifetime, stop performing the automatic off controlling when the number of times of using of the element exceeds a predetermined threshold, for the purpose of preventing deterioration of the element.

Incidentally, the number of times of off/on of the power-supply switch is different according to a usage environment of a user who uses the image forming apparatus. That is, the number of times of off/on of the power-supply switch is relatively large with respect to the user who uses the image forming apparatus frequently. On the other hand, the number of times of off/on of the power-supply switch is relatively small with respect to the user who does not use the image forming apparatus so much.

Therefore, in the usage environment of the user who uses the image forming apparatus frequently, if the automatic off controlling of the power-supply switch is stopped by setting limitation of the number of times of off/on of the power-supply switch when the number of times of off/on of the power switch exceeds the set limitation, a period for which the automatic off controlling can be performed is shortened, whereby there is a possibility that a power-saving effect deteriorates.

Moreover, if the power-supply switch by which the number of times of off/on is ensured according to the user who uses the image forming apparatus frequently is used, costs of the power-supply switch itself increase. Moreover, in this case, the size of the power-supply switch increases, whereby such an increase of the size of the power-supply switch affects the overall constitution of the image forming apparatus itself.

US 2011/083027 A1 shows a controller as a controlling unit for an image forming apparatus, providing a normal mode, a first power saving mode, in which the power consumption is smaller than that in the normal mode, a second power saving mode, in which the power consumption is smaller than that in the first power saving mode, and a third power saving mode, in which the power consumption is smaller than that in the second power saving mode. Thus, such a controller for an image forming apparatus is provided, which provides a plurality of power saving modes (i.e. the first power saving mode, the second power saving mode and the third power saving mode), which differ in their power consumption.

JP 2011/039956 A shows another controller as a controlling unit for an image forming apparatus according to the prior art.

### Summary of the Invention

It is an object of the present invention to provide an improved image forming apparatus which can operate in a plurality of power states and an improved controlling method for an image forming apparatus which can operate in a plurality of power states, such that lifetime of a power-supply switch is extended, costs of the power-supply switch can be kept low and overall (installation) size of the apparatus can be held compact.

The object of the present invention is achieved by an image forming apparatus having the features of claim 1 and by a controlling method for an image forming apparatus having the features of claim 8.

Further advantageous developments of the present invention are defined in the dependent claims.

Further features of the present invention will become apparent from the following description of exemplary embodiments with reference to the attached drawings.

### Brief Description of Drawings

[FIG. 1]FIG. 1 is a block diagram illustrating an example of a constitution of an image forming apparatus according to an embodiment of the present invention.
[FIG. 2]FIG. 2 is a block diagram illustrating a constitution of a controlling unit 10.
[FIG. 3]FIG. 3 is a block diagram mainly illustrating an example of a constitution of a power-supply unit 13 and an example of constitutions of control signals 16a to 16d of a CPU (central processing unit) 102 provided in the controlling unit 10.
[FIG. 4]FIG. 4 is a diagram illustrating power states of an image forming apparatus 1.
[FIG. 5]FIG. 5 is a flow chart indicating an example of a power controlling operation according to a first embodiment of the present invention.
[FIG. 6]FIG. 6 is a flow chart indicating an example of a power-supply switch lifetime detection controlling according to the first embodiment of the present invention.
[FIG. 7]FIG. 7 is a lifetime diagram in which a current of a resistance load is plotted along the horizontal axis.
[FIG. 8]FIG. 8 is a flow chart indicating an example of a power-supply switch lifetime detection controlling according to a second embodiment of the present invention.
[FIG. 9]FIG. 9 is a flow chart indicating an example of a power controlling operation according to the second embodiment of the present invention.

### Description of Embodiments

Hereinafter, exemplary embodiments of the present invention will be described with reference to the attached drawings.

### First Embodiment

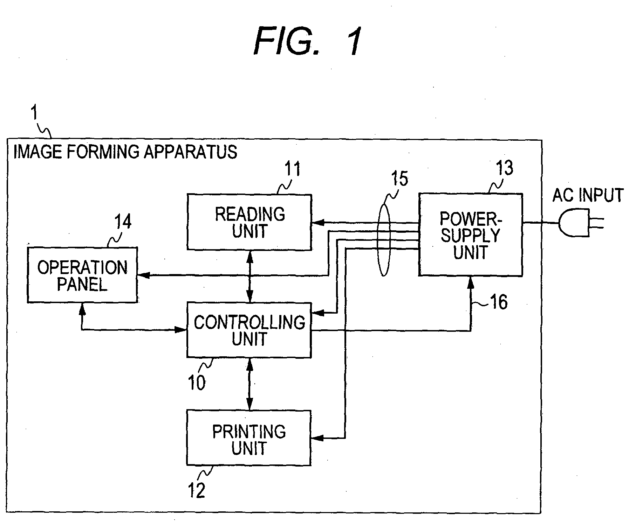

FIG. 1 is a block diagram illustrating an example of a constitution of an image forming apparatus according to the first embodiment of the present invention. More specifically, FIG. 1 shows an image forming apparatus 1 according to the present embodiment. Here, the image forming apparatus 1 includes a printing unit 12, a reading unit 11, an operation panel 14, a power-supply unit 13, and a controlling unit 10 which controls these units.

The controlling unit 10 performs various kinds of image processes on the basis of image data received from the reading unit 11, a host computer serving as an external apparatus, a facsimile apparatus connected via a PSTN (public switched telephone network) line (public line), or the like. Then, the controlling unit controls, e.g., the printing unit 12 to form an image on a paper on the basis of the processed image data.

The reading unit 11 reads an original copy as the image data, and then transfers the read image to the controlling unit 10. In this connection, the reading unit 11 is equipped with a not-illustrated scanner unit having a function for reading the original copy, and a not-illustrated original copy feeding unit having a function for transporting the original copies.

The printing unit 12 transports a recording paper, prints as a visible image the image data received from the controlling unit 10 on the transported recording paper in an electrophotographic method or the like, and then discharges the recording paper on which the visible image has been formed outside the image forming apparatus. Further, the printing unit 12 includes a not-illustrated paper feeding unit having several kinds of recording paper cassettes, a not-illustrated marking unit having a function for transferring the image data onto the recording paper and fixing the transferred image data to the recording paper, and a not-illustrated paper discharging unit having a function for performing as necessary a sorting process, a stapling process and the like to the recording papers on which the image data have been printed respectively, and outputting the processed recording papers outside the image forming apparatus.

The operation panel 14 is used to accept, from an operator (user), various kinds of settings and operations for causing the printing unit 12 to perform image forming based on the original copy read by the reading unit 11. For example, the operation panel 14 is used to input, via a touch panel thereof, selections of the number of copies of the recording papers to which the image forming should be performed, information concerning image densities in the image forming, and reading resolution (e.g., 300dpi or 600dpi) of the scanner unit used for reading the original copy.

The power-supply unit 13 is a power-supply circuit which uses an alternate-current commercial power supply (called an AC power supply) as an input. In any case, the power-supply unit 13 generates a voltage 15 for applying a direct-current voltage and/or an alternate-current voltage to the controlling unit 10, the reading unit 11, the printing unit 12 and the operation panel 14. Further, the power-supply unit 13 changes the voltage 15 according to a control signal 16 transferred from the controlling unit 10.

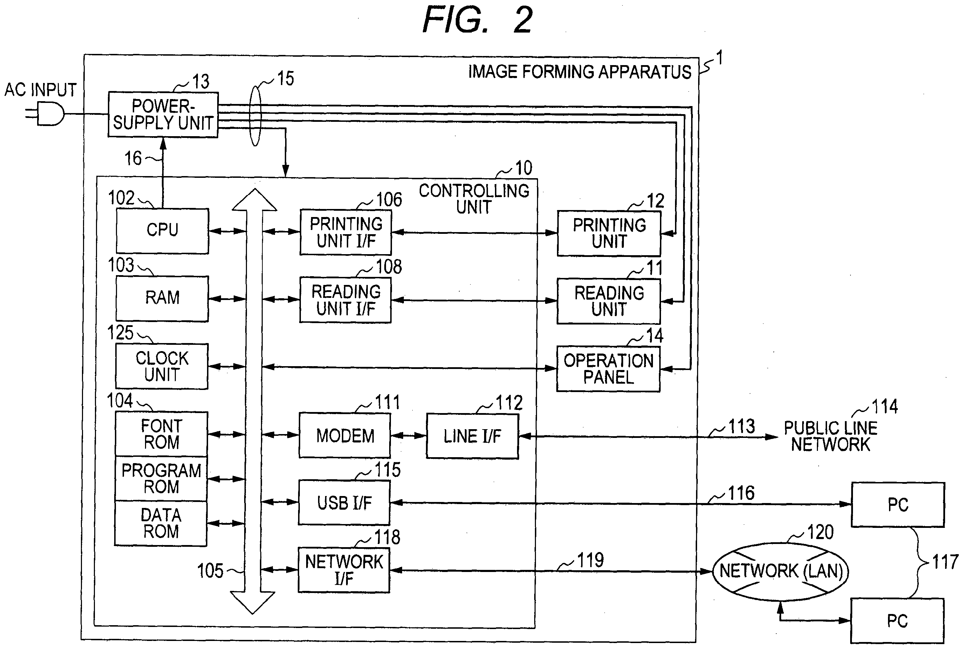

FIG. 2 is a block diagram illustrating a constitution of the controlling unit 10. Incidentally, it should be noted that, in FIG. 2, the same elements as those illustrated in FIG. 1 are respectively indicated by the same reference numerals as those illustrated in FIG. 1.

The controlling unit 10 includes a plurality of blocks such as a CPU 102, a RAM (random access memory) 103, a ROM (read only memory) 104, a printing unit I/F (interface) 106, a reading unit I/F 108, a modem 111, a line I/F 112, a USB (universal serial bus) I/F 115, a network I/F 118 and the like, and these blocks are mutually connected to others via a system bus 105.

The CPU 102 totally controls the above blocks respectively according to various kinds of control programs. Here, these control programs have been recorded in the program area (program ROM) of the ROM 104 in a computer-readable manner, and these programs are read and executed by the CPU 102. Alternatively, various kinds of control programs have been recorded as compressed data in the program area of the ROM 104, these programs are read, extracted and expanded in the RAM 103, and then the extracted and expanded programs are executed by the CPU 102. Besides, various kinds of control programs as described above may be stored in another not-illustrated storage device such as an HDD (hard disk drive), an SSD (solid state drive) or the like in a compressed state or an uncompressed state.

The network I/F 118 performs a communication process with a host computer (called a PC (personal computer) hereinafter) 117 via a network (LAN (local area network)) 120 or the like. Incidentally, the network I/F 118 and the network 120 are mutually connected to each other via a communication cable such as a LAN cable 119 or the like.

The modem 111, which is connected to a public network line 114 via the line I/F 112, performs a communication process with another image forming apparatus, a facsimile apparatus, a telephone set or the like, which is not illustrated in the drawing. Generally, the line I/F 112 and the public network line 114 are mutually connected to each other via a telephone line 113 or the like. Further, the USB I/F 115 and the PC 117 are mutually connected to each other via a USB code 116 or the like.

The printing unit I/F 106 serves as an interface for outputting an image signal to the printing unit (printer engine) 12. Further, the reading unit I/F 108 serves as an interface for inputting a read image signal from the reading unit (scanner engine) 11. Furthermore, the CPU 102 is used to process the image signal input from the reading unit I/F 108, and output the processed image signal as a recording image signal to the printing unit I/F 106.

Besides, the CPU 102 is used to display characters and symbols on the display section of the operation panel 14 by using font information stored in the font area (font ROM) of the ROM 104, and to receive instruction information based on a user's instruction from the operation panel 14.

Incidentally, the data area (data ROM) of the ROM 104 has been constituted in a rewritable manner (for example, a flash ROM or the like). Therefore, device information of the image forming apparatus 1, telephone book information of users, department management information and the like have been stored in the data area of the ROM 104 by the CPU 102. Then, the stored information is read and updated as necessary by the CPU 102.

A clock unit 125, which is backed up by a primary battery, counts date and time on the basis of calendar information previously set by the user of the image forming apparatus 1. Then, the information indicating the date and time counted by the clock unit 125 is read by the CPU 102, and then stored in the predetermined areas in the data areas of the RAM 103 and the ROM 104.

The power-supply unit 13 changes the voltage 15 of the power-supply unit to be applied to each block in response to the control signal 16 connected to the output port of the CPU 102.

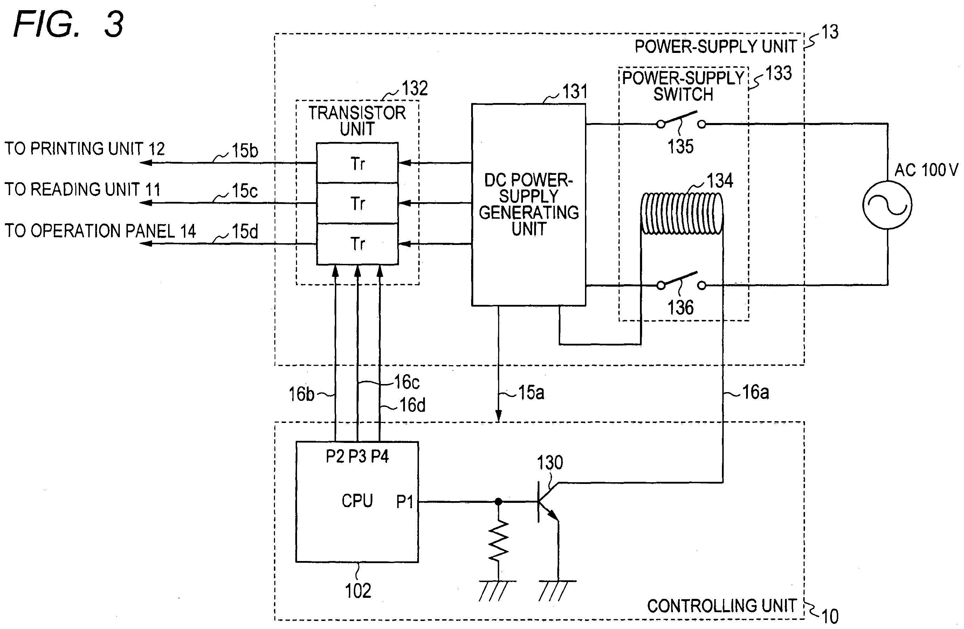

FIG. 3 is a block diagram illustrating an example of a constitution of the power-supply unit 13 and an example of a constitution of the control signal 16 of the CPU 102 provided in the controlling unit 10. Incidentally, it should be noted that, in FIG. 3, the same elements as those illustrated in FIGS. 1 and 2 are respectively indicated by the same reference numerals as those illustrated in FIGS. 1 and 2.

As illustrated in FIG. 3, the power-supply unit 13 includes a DC power-supply generating unit 131, a transistor unit 132 and a power-supply switch 133.

The DC power-supply generating unit 131 rectifies and transforms power supplied from a commercial power supply (AC 100V), and then applies the obtained power to the respective blocks of the image forming apparatus 1 as DC power-supply voltages 15a, 15b, 15c and 15d.

The transistor unit 132 is constituted by an FET (field-effect transistor) and the like. The transistor unit 132 controls on/off of the DC power-supply voltages 15b, 15c and 15d to be applied respectively to the printing unit 12, the reading unit 11 and the operation panel 14, in response to respective controls signals 16b, 16c and 16d supplied from the CPU 102. Here, the signal lines to be used to supply the control signals 16b, 16c and 16d are connected respectively to output ports P2, P3 and P4 of the CPU 102.

A solenoid 134 is provided in the power-supply switch 133. Thus, when the solenoid 134 is electrified, the contact points of switches 135 and 136 are released, whereby the power-supply switch 133 is turned off.

Incidentally, when the power-supply switch 133 is turned on by a manual operation of the user and thus the power is supplied by the DC power-supply voltage 15a from the DC power-supply generating unit 131, the controlling unit 10 can be operated.

The power-supply switch 133 has a mechanical relay which includes therein the solenoid 134 and the switches 135 and 136.

At the time when the power-supply unit is turned on, no power is supplied to the solenoid 134. Then, when a condition for activating an automatic off function for the power-supply unit is satisfied in the image forming apparatus 1, the power is supplied to the solenoid 134 by the controlling unit 10 in response to a control signal 16a to be supplied to the power-supply switch 133, and the switches 135 and 136 are turned off, whereby the power supply to each block is stopped.

The signal line for supplying the control signal 16a to the power-supply switch 133 is connected to an output port P1 of the CPU 102 via a transistor 130.

For example, when a high-level signal is output from the output port P1 of the CPU 102, the transistor 130 is turned on to apply the current to the solenoid 134. That is, at this time, the current flows in the circuit which is constituted by the DC power-supply generating unit 131 → the solenoid 134 → the transistor 130 → a ground GND, thereby driving the solenoid 134. Thus, when the solenoid 134 is driven, the switches 135 and 136 are driven and thus turned off.

As just described, the power-supply switch 133 is turned off by the internal mechanical relay (the solenoid 134 and the switches 135 and 136) driven by the user's manual operation or the control of the CPU 102, whereby the power supply to the image forming apparatus 1 is cut off.

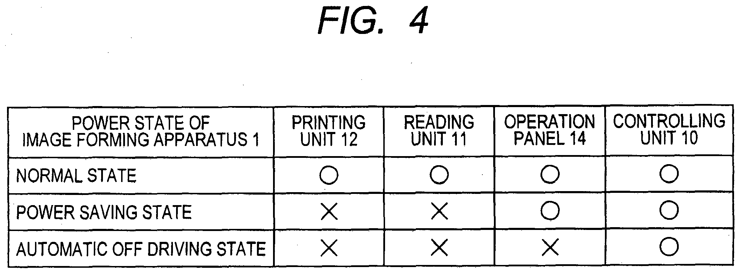

FIG. 4 is a diagram illustrating power states of the image forming apparatus 1.

In FIG. 4, symbols (o, ×) respectively indicate the power states of the respective blocks. That is, the state that the DC power-supply voltages 15a, 15b, 15c and 15d are applied from the DC power-supply generating unit 131 to the respective blocks is indicated by the symbol "o", while the state that these voltages are not applied is indicated by the symbol "×". Incidentally, the power-supply voltages are applied to the respective blocks under the control of the above output ports P1 to P4 of the CPU 102.

In the drawing, a normal state is equivalent to the power state to which the image forming apparatus 1 is transitioned after the power-supply switch 133 was turned on. In the normal state, the power-supply voltages are applied from the DC power-supply generating unit 131 to the printing unit 12, the reading unit 11 and the operation panel 14, in addition to the controlling unit 10. Thus, all the operations of the image forming apparatus 1 can be performed by the user.

Further, a power saving state is equivalent to the power state to which the image forming apparatus is transitioned in a case where a state that any operation is not performed by the user continues for a predetermined power saving state transition time (Tsl) or more in the normal state. Here, the power saving state transition time (Tsl) is previously set in response to an instruction by a user's operation to a not-illustrated key on the operation panel 14, and the set power saving state transition time (Tsl) can be stored in the data area of the ROM 104 and read by the CPU 102.

In the power saving state, the power-supply voltages are applied from the DC power-supply generating unit 131 to the controlling unit 10 and the operation panel 14. On the other hand, the power-supply voltages 15b and 15c are not applied respectively to the printing unit 12 and the reading unit 11 by switching the respective control signals 16b and 16c from the output ports P2 and P3 of the controlling unit 10 under the control of the transistor unit 132.

Incidentally, in the power saving state, for example, when any one of the following operations (1) to (4) is performed by the user, the performed operation is recognized by the CPU 102, and the control signals 16b and 16c from the respective output ports P2 and P3 are switched so as to apply the power-supply voltages 15b and 15c, whereby the image forming apparatus is returned to the normal state.
(1) The operation key on the operation panel 14 is depressed.
(2) The image signal is input from the network I/F 118.
(3) The image signal is input from the USB I/F 115.
(4) The image signal is input from the modem 111.

An automatic off driving state is equivalent to the power state to which the image forming apparatus is transitioned in a case where a state that any operation is not performed by the user continues for a predetermined automatic off driving state transition time (Tsh) in the power saving state. Here, the automatic off driving state transition time (Tsh) is previously set in response to an instruction by a user's operation to a not-illustrated key on the operation panel 14, and the set automatic off driving state transition time (Tsh) can be stored in the data area of the ROM 104 and read by the CPU 102.

The automatic off driving state is the power state that automatic off controlling of the power-supply switch 133 is performed from the controlling unit 10.

In the automatic off driving state, the power-supply voltage is applied from the DC power-supply generating unit 131 to the controlling unit 10. On the other hand, the power-supply voltages 15b, 15c and 15d are not applied respectively to the printing unit 12, the reading unit 11 and the operation panel 14 by switching the respective control signals 16b, 16c and 16d from the output ports P2, P3 and P4 of the controlling unit 10 under the control of the transistor unit 132. As just described, among the plurality of power states (the normal state, the power saving state, and the automatic off driving state), the automatic off driving state is the power state capable of minimizing the power consumption and thus minimizing the resistance load of the power-supply switch 133.

The automatic off driving to the power-supply switch 133 from the controlling unit 10 is performed by supplying the power to the solenoid 134 and thus turning off the switches 135 and 136 under the control of the above output port P1 of the CPU 102.

Incidentally, since arc discharges occur at the contact points of the switches 135 and 136 at the time of switching of the switches 135 and 136, the contact surfaces thereof deteriorate. Here, a rate of such deterioration at that time exponentially increases according to magnitude of the power being the resistance load of the power-supply switch 133.

Therefore, it is possible, by decreasing the resistance load at the time of the switching of the switches 135 and 136, to repress the rate of the deterioration of the power-supply switch 133 and thus extends the lifetime of the power-supply switch 133.

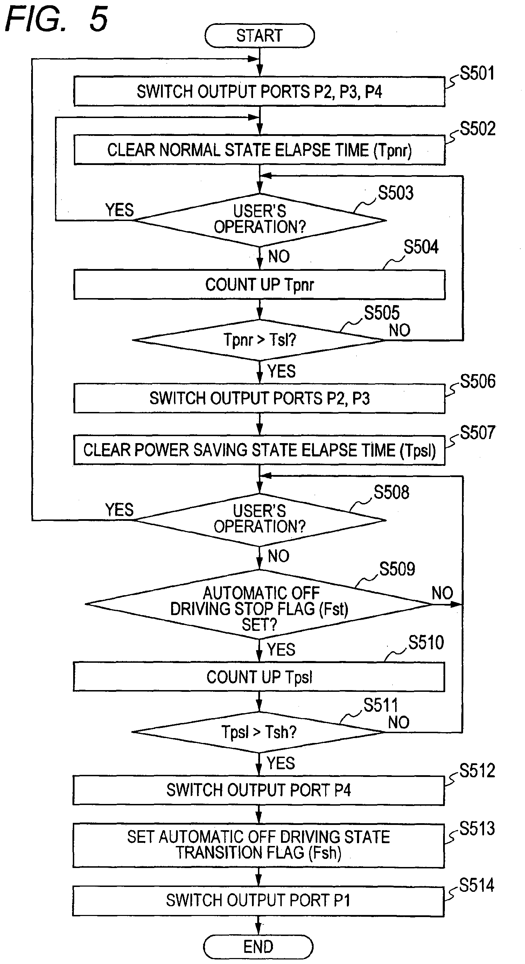

Hereinafter, a power controlling operation for transitioning the power state of the image forming apparatus 1 from the normal state to the automatic off driving state and thus automatically turning off the power-supply switch 133 will be described with reference to FIG. 5.

Namely, FIG. 5 is the flow chart indicating an example of the power controlling operation according to the first embodiment of the present invention. Here, it should be noted that the respective steps shown in FIG. 5 are carried out by the CPU 102 on the basis of the program stored in the program area of the ROM 104 (or extracted and expanded from the program area of the ROM 104 to the RAM 103).

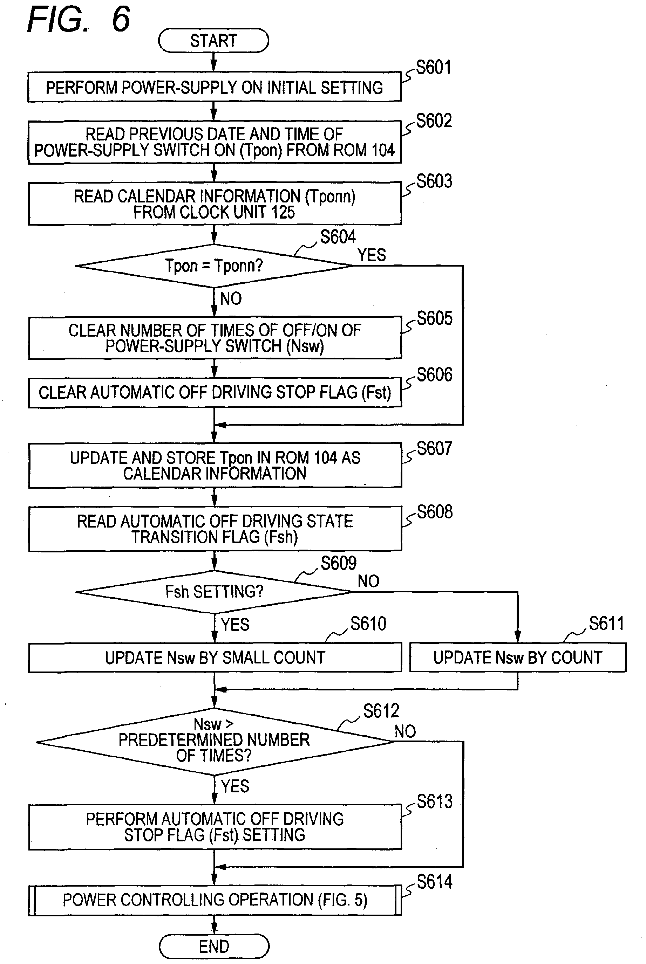

After the power-supply unit was turned on, the processes indicated in a later-described flow chart of FIG. 6 are performed and then the processes in this flow chart are started by the CPU 102.

Initially, in a step S501, it is controlled by the CPU 102 to apply the DC power-supply voltages 15b, 15c and 15d from the DC power-supply generating unit 131 by respectively switching the output ports P2, P3 and P4, so as to transition the image forming apparatus to the normal state.

Next, in a step S502, a numerical value of a normal state elapse time (Tpnr) stored in the data area of the ROM 104 is initialized (cleared) to "0" by the CPU 102.

In a step S503, it is discriminated by the CPU 102 whether or not a user's operation is performed, based on presence/absence of an input signal from the operation panel 14, the network I/F 118, the USB I/F 115 or the modem 111 (S503).

Then, when the signal is input from the operation panel 14, the network I/F 118, the USB I/F 115 or the modem 111, it is discriminated by the CPU 102 that the user's operation is performed (YES in S503), the operation according to the input signal is performed, and then the normal state is continued. Subsequently, the process is returned to the step S502, and the numerical value of the normal state elapse time (Tpnr) is initialized (cleared) to "0".

On the other hand, when the signal is not input from the operation panel 14, the network I/F 118, the USB I/F 115 or the modem 111, it is discriminated by the CPU 102 that the user's operation is not performed (NO in S503), and the process is advanced to a step S504.

In the step S504, the numerical value of the normal state elapse time (Tpnr) stored in the data area of the ROM 104 is updated (counted up) by the CPU 102.

Next, in a step S505, the numerical value of the power saving state transition time (Tsl) previously stored in the data area of the ROM 104 and the numerical value of the normal state elapse time (Tpnr) are compared with each other by the CPU 102, whereby it is discriminated whether or not the numerical value of the normal state elapse time (Tpnr) is larger than the numerical value of the power saving state transition time (Tsl).

When it is discriminated that the numerical value of the normal state elapse time (Tpnr) is not larger than the numerical value of the power saving state transition time (Tsl) (Tpnr ≤ Tsl: NO in S505), the process is returned to the step S503 by the CPU 102.

On the other hand, when it is discriminated that the numerical value of the normal state elapse time (Tpnr) is larger than the numerical value of the power saving state transition time (Tsl) (Tpnr > Tsl: YES in S505), the process is advanced to a step S506 by the CPU 102.

In the step S506, it is controlled by the CPU 102 not to apply the DC power-supply voltages 15b and 15c from the DC power-supply generating unit 131 by respectively switching the output ports P2 and P3, so as to transition the image forming apparatus 1 to the power saving state.

Next, in a step S507, a numerical value of a power saving state elapse time (Tpsl) stored in the data area of the ROM 104 is initialized (cleared) to "0" by the CPU 102, and the process is advanced to a step S508.

In the step S508, it is discriminated by the CPU 102 whether or not a user's operation is performed, based on presence/absence of an input signal from the operation panel 14, the network I/F 118, the USB I/F 115 or the modem 111.

Then, when the signal is input from the operation panel 14, the network I/F 118, the USB I/F 115 or the modem 111, it is discriminated by the CPU 102 that the user's operation is performed (YES in S508), and the process is returned to the step S501 to transition the image forming apparatus 1 to the normal state.

On the other hand, when the signal is not input from the operation panel 14, the network I/F 118, the USB I/F 115 or the modem 111, it is discriminated by the CPU 102 that the user's operation is not performed (NO in S508), and the process is advanced to a step S509.

In the step S509, an automatic off driving stop flag (Fst) of the power-supply switch 133, later described in the flow chart of FIG. 6, is read from the data area of the ROM 104 by the CPU 102, so as to discriminate whether or not the automatic off driving stop flag (Fst) has been set (Fst = 1).

Then, when it is discriminated that the automatic off driving stop flag (Fst) has not been set (Fst = 0) (NO in S509), the process is returned to the step S508 by the CPU 102, thereby stopping subsequent transition of the image forming apparatus to the automatic off driving state.

On the other hand, when it is discriminated that the automatic off driving stop flag (Fst) has been set (Fst = 1) (YES in S509), the process is advanced to a step S510. In this step, the numerical value of the power saving state elapse time (Tpsl) stored in the data area of the ROM 104 is updated (counted up) by the CPU 102.

Next, in a step S511, the numerical value of the automatic off driving state transition time (Tsh) previously stored in the data area of the ROM 104 and the numerical value of the power saving state elapse time (Tpsl) are compared with each other by the CPU 102, whereby it is discriminated whether or not the numerical value of the power saving state elapse time (Tpsl) is larger than the numerical value of the automatic off driving state transition time (Tsh).

When it is discriminated that the numerical value of the power saving state elapse time (Tpsl) is not larger than the numerical value of the automatic off driving state transition time (Tsh) (Tpsl ≤ Tsh: NO in S511), the process is returned to the step S508 by the CPU 102.

On the other hand, when it is discriminated that the numerical value of the power saving state elapse time (Tpsl) is larger than the numerical value of the automatic off driving state transition time (Tsh) (Tpsl > Tsh: YES in S511), the process is advanced to a step S512 by the CPU 102.

In the step S512, it is controlled by the CPU 102 not to apply the DC power-supply voltage 15d from the DC power-supply generating unit 131 by switching the output port P4, so as to transition the image forming apparatus 1 to the automatic off driving state.

Next, in a step S513, an automatic off driving state transition flag (Fsh) is set (Fsh = 1) and stored in the data area of the ROM 104, by the CPU 102.

Next, in a step S514, it is controlled by the CPU 102 to switch the output port P1 to "high" to supply the power to the solenoid 134, thereby turning off the power-supply switch 133.

Hereinafter, lifetime detection controlling of the power-supply switch 133 according to the first embodiment will be described with reference to FIG. 6.

FIG. 6 is the flow chart indicating an example of the power-supply switch lifetime detection controlling according to the first embodiment of the present invention. Here, it should be noted that the respective steps shown in FIG. 6 are carried out by the CPU 102 on the basis of the program stored in the program area of the ROM 104 (or extracted and expanded from the program area of the ROM 104 to the RAM 103).

In this process, it is prevented that the number of times of off/on of the power-supply switch reaches the number of times of off/on defined as the lifetime of the used power-supply switch 133 in a period of use.

For example, when the power-supply switch 133 is used five days a week on the assumption that the number of times of off/on defined as the lifetime of the power-supply switch 133 is 20,000 and the period of use of the image forming apparatus 1 is five years, the number of off/on per day is limited to about 15 times. In this case, in order to prevent that the number of times of off/on reaches the number of times of off/on defined as the lifetime of the power-supply switch 133 in the period of use of the image forming apparatus 1, the upper limit of the number of counting times of off/on of the power-supply switch 133 per day is set to 10 times. Then, when the number of times of off/on exceeds the set 10 times, it is controlled to stop performing the automatic off driving, thereby preventing that the number of times of off/on increases.

When the power-supply switch 133 is turned on by the user and thus the power supply voltage is applied to the controlling unit 10, the processes indicated by the flow chart of FIG. 6 are started.

Initially, in a step S601, an initial setting (power-supply on initial setting) is performed to the controlling unit 10 of the image forming apparatus 1 by the CPU 102.

Next, in a step S602, date and time information (Tpon), which was stored in the data area of the ROM 104 at the time when the power-supply switch 133 was previously turned on by the user, is read and then written in the RAM 103 by the CPU 102.

In a step S603, current calendar information (e.g., December 3, 2010 - 16:48:53) is read from the clock unit 125 by the CPU 102. Then, the read calendar information is written in the RAM 103 as date and time information (Tponn) indicating the time at which the power-supply switch 133 is turned on this time.

In a step S604, the date and time information (Tpon) and the date and time information (Tponn) are compared with each other by the CPU 102, whereby it is discriminated whether the date and time has not been changed (Tpon = Tponn).

When it is discriminated that the date and time has been changed (e.g., Tpon = December 2, 2010; and Tponn = December 3, 2010) (NO in S604), the process is advanced to a step S605 by the CPU 102.

In the step S605, the number of times of off/on (Nsw) of the power-supply switch per day stored in the data area of the ROM 104 is initialized (cleared) by the CPU 102. Further, in a step S606, the automatic off driving stop flag (Fst) stored in the data area of the ROM 104 is cleared (Fst = 0) by the CPU 102, and the process is advanced to a step S607.

On the other hand, when it is discriminated in the step S604 that the date and time has not been changed (e.g., Tpon = December 3, 2010; and Tponn = December 3, 2010) (YES in S604), the number of times of off/on (Nsw) of the power-supply switch per day is not cleared by the CPU 102, and the process is advanced to the step S607.

In the step S607, the date and time information (Tpon) indicating the date and time at which the power-supply switch 133 was previously turned on is changed (updated) by the date and time information (Tponn) indicating the date and time at which the power-supply switch 133 is turned on this time. Then, the obtained date and time information (Tpon) is stored in the data area of the ROM 104 by the CPU 102. Thus, in a case where the user turns on the power-supply switch 133 next time, when the date and time information (Tpon) is read from the ROM 104 by the CPU 102, the read information is the date and time information (Tponn) indicating the date and time at which the power-supply switch 133 is turned on this time.

Next, in a step S608, the automatic off driving state transition flag (Fsh) is read from the data area of the ROM 104 by the CPU 102. Here, the automatic off driving state transition flag (Fsh) is the flag for confirming the transition to the automatic off driving state, which was stored in the data area of the ROM 104 by the CPU 102 at the time of the previous transition to the automatic off driving state. Therefore, on the basis of whether the set value of the automatic off driving state transition flag (Fsh) is "1" or "0", it is possible for the CPU 102 to discriminate whether the previous off of the power-supply switch 133 is based on the automatic off controlling or the user's manual operation.

Next, in a step S609, it is discriminated by the CPU 102 whether or not the automatic off driving state transition flag (Fsh) has been set (Fsh = 1). Then, when it is discriminated that the automatic off driving state transition flag (Fsh) has not been set (Fsh = 0) (NO in S609), the process is advanced to a step S611 by the CPU 102. In the step S611, the numerical value of the number of times of off/on (Nsw) of the power-supply switch per day read from the data area of the ROM 104 is updated by performing increment of "1" count by the CPU 102, and the updated number of times of off/on (Nsw) of the power-supply switch per day is stored in the data area of the ROM 104 (update of Nsw by count). Then, the process is advanced to a step S612.

On the other hand, when it is discriminated that the automatic off driving state transition flag (Fsh) has been set (Fsh = 1) (YES in S609), the process is advanced to a step S610 by the CPU 102. In the step S610, the numerical value of the number of times of off/on (Nsw) of the power-supply switch per day read from the data area of the ROM 104 is updated by performing increment of a "small" count by the CPU 102, and the updated number of times of off/on (Nsw) of the power-supply switch per day is stored in the data area of the ROM 104 (update of Nsw by small count). Then, the process is advanced to the step S612.

Here, the increment of the value (Nsw) by small count (update of Nsw by small count) in the step S610 will be described.

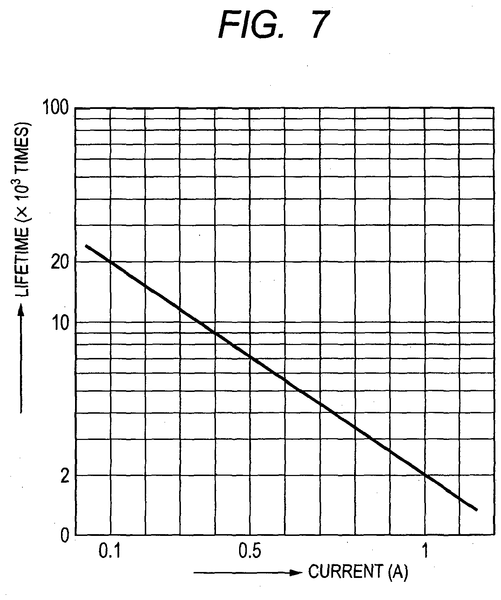

The increment of the value (Nsw) by small count (update of Nsw by small count) indicates the update of the count time based on the lifetime of the power-supply switch 133 previously calculated according to the resistance load of the power-supply switch 133 in the automatic off controlling. Here, the lifetime of the power-supply switch 133 to be used will be described with reference to FIG. 7.

FIG. 7 is the graph indicating an example of the lifetime curve of the power-supply switch 133.

In the lifetime curve graph of FIG. 7, a current of the resistance load is plotted along the horizontal axis, and the number of times of off/on being the lifetime of the power-supply switch 133 is plotted along the vertical axis.

In this graph, when the resistance load of the power-supply switch 133 is 1A, the number of times of off/on being the lifetime is 2,000. Further, when the resistance load is 0.1A, the number of times of off/on is 20,000. Here, it is assumed that the power at the time when the image forming apparatus 1 is in the normal state is 1A, and that the power at the time when the image forming apparatus 1 is in the automatic off driving state is 0.1A. In these cases, if the power-supply switch 133 is turned off in the normal state, the lifetime is equivalent to 2,000 times. Further, if the power-supply switch 133 is turned off in the automatic off driving state, the lifetime is equivalent to 20,000 times.

Therefore, if the power-supply switch 133 is turned off in the automatic off driving state by the number of times (10 times = 20,000/2,000 times in the above example) based on the ratio of the number of times (20,000 times in the above example) of off/on being the lifetime of the power-supply switch 133 in the automatic off driving state to the number of times (2,000 times in the above example) of off/on being the lifetime of the power-supply switch 133 in the normal state, it is conceivable that the power-supply switch 133 is used up as well as a case where the power-supply switch 133 is turned off once in the normal state.

Consequently, according to the present embodiment, in the step S610, the numerical value of the number of times of off/on (Nsw) of the power-supply switch per day is incremented by "1/10" count (adding 0.1 to the numerical value of Nsw) by the CPU 102. Alternatively, if the advance of the process to the step S610 is performed 10 times, the numerical value of the number of times of off/on (Nsw) of the power-supply switch per day may be incremented by "1" count by the CPU 102. That is, it may be possible to adopt any constitution if it is the constitution that the number of times of off/on (Nsw) of the power-supply switch is counted up by "1" when the power-supply switch 133 is turned off by the manual operation, or the number of times of off/on (Nsw) of the power-supply switch is counted up by "1" when the power-supply switch 133 is turned off by a second number of times (10 times in the above example) under the control of the CPU 102.

Thus, it is possible for the CPU 102 to appropriately count the number of times of off/on of the power-supply switch 133, according to whether the previous off of the power-supply switch 133 was based on the automatic off controlling or based on the user's manual operation.

Next, in the step S612, the numerical value of the number of times of off/on (Nsw) of the power-supply switch per day and a predetermined number of times (the number of times of off/on of the power-supply switch 133 previously stored as a predetermined numerical value in the ROM 104 (a first number of times)) are compared with each other by the CPU 102. Here, with respect to the number of times of off/on of the power-supply switch 133 previously stored in the ROM 104, for example, when the number of times of off/on defined as the lifetime of the power-supply switch 133 is equivalent to 20,000 times, it is assumed that the numerical value of "10 times" has been previously stored in the ROM 104 as the number of times of off/on per day. That is, the above predetermined number of times is equivalent to the number of times based on the number of times of off/on defined as the lifetime of the power-supply switch 133.

Then, when it is discriminated that the numerical value of the number of times of off/on (Nsw) of the power-supply switch per day is larger than the predetermined number of times (e.g., Nsw ≥ 10) (YES in S612), the process is advanced to a step S613 by the CPU 102. In the step S613, the automatic off driving stop flag (Fst) is set (Fst = 1) and stored in the data area of the ROM 104 by the CPU 102, and then the process is advanced to a step S614.

On the other hand, when it is discriminated that the numerical value of the number of times of off/on (Nsw) of the power-supply switch per day is not larger than the predetermined number of times (e.g., Nsw < 10) (NO in S612), the automatic off driving stop flag (Fst) is not set (Fst stored in the ROM 104 remains "0") by the CPU 102, and the process is advanced to the step S614.

In the step S614, the power controlling operation indicated by the flow chart of FIG. 5 is performed by the CPU 102.

Incidentally, in the power controlling operation in FIG. 5, the automatic off driving stop flag (Fst) is the recognition flag for causing the CPU 102 not to transition the image forming apparatus to the automatic off driving state.

When the automatic off driving is performed by the CPU 102, the setting of the automatic off driving state transition flag (Fsh) is discriminated in the step S513 of FIG. 5, whereby it is controlled to select whether to perform the automatic off driving or maintain the power saving state without performing the automatic off driving until the date and time information (Tpon) is updated. That is, when the counted numerical value of the number of times of off/on (Nsw) of the power-supply switch per day exceeds the first number of times, it is controlled by the CPU 102 not to perform the controlling (automatic off driving) for turning off the power-supply switch. Thus, by this controlling, it is possible for the CPU 102 to reduce the number of times of off/on of the power-supply switch 133 by the automatic off driving, thereby enabling to suppress that the power-supply switch 133 comes to its lifetime.

Incidentally, in the present embodiment, the image forming apparatus 1 has the two power states of the normal state and the power saving state in addition to the automatic off driving state. However, the power states of the image forming apparatus only have to be two or more. Namely, the present invention is not limited by the number of power states. For example, when the number of the power states other than the automatic off driving state is three or more, a modification can be achieved according to the constitution of the image forming apparatus 1 such as an increase of the kinds of power supplies from the power-supply unit 13, or an increase of the power supply destinations of the image forming apparatus 1.

Further, the automatic off driving state only has to be the state capable of performing the driving controlling to the solenoid 134 of the power-supply switch 133, and, to be, among the power states achievable in the image forming apparatus 1, the state capable of minimizing the power. In the present embodiment, the power supply from the DC power-supply generating unit 131 to the solenoid 134 and the output port controlling by the CPU 102 correspond to the automatic off controlling state.

Furthermore, in the present embodiment, the number of times of off/on of the power-supply switch 133 to be compared in the process indicated by the flow chart of FIG. 6 is the number of times in the period of one day. However, the relevant period only has to be a specific period by which it is possible to suppress that the power-supply switch 133 comes to its lifetime (for example, one year, one month, one week, a specific time, or the like). That is, it is discriminated by the CPU 102 whether or not the specific period has elapsed, and the number of times of switching is initialized for each specific period (S604 to S605 in FIG. 6).

As just described, according to the present embodiment, when the automatic off driving is performed by the power-supply switch equipped with the mechanical relay, the resistance load of the power-supply switch is decreased at the time of performing the automatic off driving of the power-supply switch. The number of times of off/on of the power-supply switch to be performed in the specific period based on the lifetime of the used power-supply switch is defined. The number of times of off/on of the power-supply switch is counted in the specific period. The automatic off driving is stopped when the counted number of times of off/on of the power-supply switch reaches the defined number of times. Further, when the number of times of off/on of the power-supply switch is counted, how to count the number of times of off of the power-supply switch by the automatic off driving is changed. Therefore, it is possible to suppress that the number of times of the automatic off driving affects the number of times of off/on of the power-supply switch. Thus, it is possible to immediately perform the automatic off driving when the power-supply switch is not used as suppressing costs for the power-supply switch itself, whereby it is possible to cope with the entire power saving of the apparatus.

Furthermore, according to the present invention, it is possible to extend the lifetime of the power-supply switch while using the conventional power-supply switch as the switch itself. Consequently, it is unnecessary to use the power-supply switch for which the number of times of off/on has been ensured according to the user who uses the image forming apparatus frequently. Thus, it is possible to prevent that the costs of the power-supply switch itself increase, and it is also possible to prevent that the increased size of the power-supply switch affects the overall constitution of the image forming apparatus itself.

Incidentally, in the present embodiment, when the number of times of off/on of the power-supply switch exceeds the predetermined number of times in the predetermined period, it is controlled not to perform the automatic off driving. However, the present invention is not limited to the constitution of controlling not to perform the automatic off driving when the number of times of off/on of the power-supply switch exceeds the predetermined number of times in the predetermined period. That is, the present invention also includes a constitution that the CPU 102 does not perform the controlling based on the number of times of off/on but performs, when performing the automatic off driving, the automatic off driving by transitioning to the power state (automatic off driving state) of which the power consumption is small.

Even in this constitution, it is possible to extend the lifetime of the power-supply switch while using the conventional power-supply switch as the switch itself. Consequently, it is unnecessary to use the power-supply switch for which the number of times of off/on has been ensured according to the user who uses the image forming apparatus frequently. Thus, it is possible to prevent that the costs of the power-supply switch itself increase, and it is also possible to prevent that the increased size of the power-supply switch affects the overall constitution of the image forming apparatus itself.

### Second Embodiment

In the above-described first embodiment, the power state is transitioned in the order of the normal state → the power saving state → the automatic off driving state according to the power controlling indicated by the flow chart of FIG. 5, and then the automatic off driving of the power-supply switch 133 is performed.

Further, to achieve the power saving of the image forming apparatus 1, the automatic off driving of the power-supply switch 133 is performed while the normal state is being maintained, whereby it is possible to turn off the power-supply switch 133 as compared with the first embodiment.

In this case, however, since the power-supply switch 133 is turned off while the resistance load thereof is still large, such an off operation seriously affects the lifetime of the power-supply switch 133.

Therefore, according to the second embodiment, in the process indicated by the flow chart of FIG. 6, when the number of times of off/on (Nsw) of the power-supply switch is counted when the power supply is on, the changed counting method in the automatic off driving to be performed in the steps S609 and S610 is not performed. Namely, the number of times of off/on (Nsw) of the power-supply switch is counted as the power-supply off in the normal state in the step S611.

Then, when the number of times of off/on (Nsw) of the power-supply switch reaches a predetermined number of times, the subsequent automatic off driving of the power-supply switch 133 is performed after the power state is transitioned to the automatic off driving state.

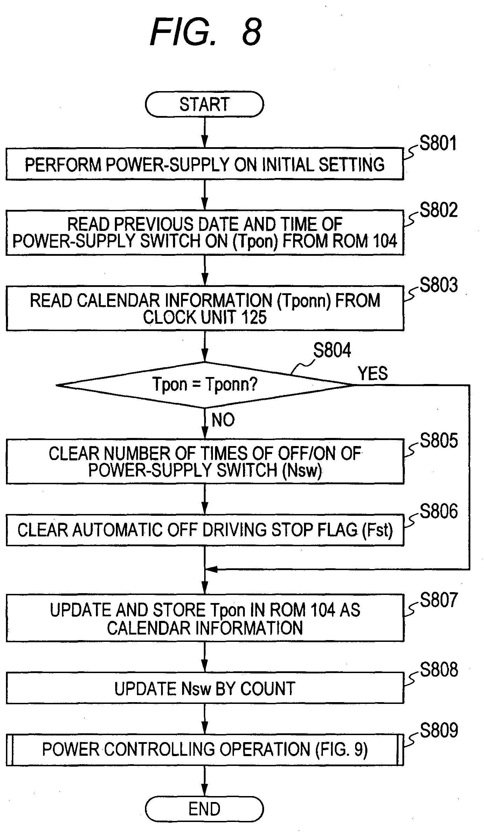

Hereinafter, lifetime detection controlling of the power-supply switch 133 according to the second embodiment will be described with reference to FIG. 8.

FIG. 8 is the flow chart indicating an example of the power-supply switch lifetime detection controlling according to the second embodiment of the present invention. Here, it should be noted that the respective steps shown in FIG. 8 are carried out by the CPU 102 on the basis of the program stored in the program area of the ROM 104 (or extracted and expanded from the program area of the ROM 104 to the RAM 103).

When the power-supply switch 133 is turned on by the user and thus the power supply voltage is applied to the controlling unit 10, the processes indicated by the flow chart of FIG. 8 are started.

Here, since the processes in steps S801 to S807 are respectively the same as those in the steps S601 to S607 indicated by the flow chart of FIG. 6, the explanations thereof will be omitted.

Next, in a step S808, the numerical value of the number of times of off/on (Nsw) of the power-supply switch per day read from the data area of the ROM 104 is updated by performing increment of "1" count by the CPU 102 (update of Nsw by count), and the updated number of times of off/on (Nsw) of the power-supply switch per day is stored in the data area of the ROM 104. Then, the process is advanced to a step S809.

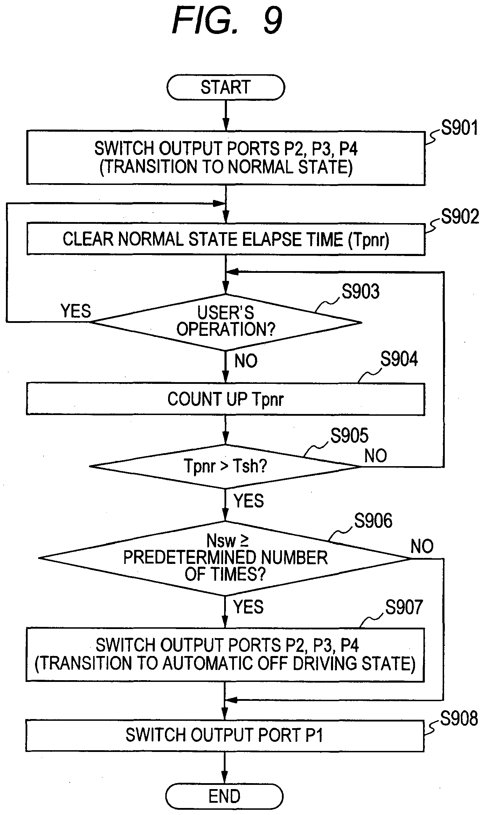

In the step S809, a power controlling operation illustrated in later-described FIG. 9 is performed.

Hereinafter, the power controlling operation according to the second embodiment will be described with reference to FIG. 9.

FIG. 9 is the flow chart indicating an example of the power controlling operation according to the second embodiment of the present invention. Here, it should be noted that the respective steps shown in FIG. 9 are carried out by the CPU 102 on the basis of the program stored in the program area of the ROM 104 (or extracted and expanded from the program area of the ROM 104 to the RAM 103).

When the power-supply unit is turned on, the processes indicated by the flow chart of FIG. 8 is performed, and then the processes indicated by the flow chart of FIG. 9 are started by the CPU 102.

Here, since the processes in steps S901 to S904 are respectively the same as those in the steps S501 to S504 indicated by the flow chart of FIG. 5, the explanations thereof will be omitted.

Then, in a step S905, the numerical value of the automatic off driving state transition time (Tsh) previously stored in the data area of the ROM 104 and the numerical value of the normal state elapse time (Tpnr) are compared with each other by the CPU 102, whereby it is discriminated whether or not the numerical value of the normal state elapse time (Tpnr) is larger than the numerical value of the automatic off driving state transition time (Tsh).

Then, when it is discriminated that the numerical value of the normal state elapse time (Tpnr) is not larger than the numerical value of the automatic off driving state transition time (Tsh) (Tpnr ≤ Tsh: NO in S905), the process is returned to the step S903 by the CPU 102.

On the other hand, when it is discriminated that the numerical value of the normal state elapse time (Tpnr) is larger than the numerical value of the automatic off driving state transition time (Tsh) (Tpnr > Tsh: YES in S905), the process is advanced to a step S906 by the CPU 102.

In the step S906, the numerical value of the number of times of off/on (Nsw) of the power-supply switch per day and the number of times of off/on of the power-supply switch 133 previously stored as a predetermined numerical value in the ROM 104 (a predetermined number of times) are compared with each other by the CPU 102.

Then, when it is discriminated that the numerical value of the number of times of off/on (Nsw) of the power-supply switch per day is not larger than the number of times of off/on of the power-supply switch 133 previously stored in the ROM 104 (e.g., Nsw < 10) (NO in S906), the process is advanced to a step S908 by the CPU 102. In this step, it is controlled to perform the automatic off driving of the power-supply switch 133 while maintaining the normal state. That is, it is controlled by the CPU 102 to switch the output port P1 to "high" while maintaining the normal state to supply the power to the solenoid 134, thereby turning off the power-supply switch 133.

On the other hand, when it is discriminated that the numerical value of the number of times of off/on (Nsw) of the power-supply switch per day is larger than the number of times of off/on of the power-supply switch 133 previously stored in the ROM 104 (e.g., Nsw ≥ 10) (YES in S906), the process is advanced to a step S907 by the CPU 102. In this step, it is controlled to transition the image forming apparatus 1 to the automatic off driving state by respectively switching the output ports P2, P3 and P4. After then, in the step S908, it is controlled by the CPU 102 to perform the automatic off driving of the power-supply switch 133. That is, after the image forming apparatus was transitioned to the automatic off driving state, it is controlled by the CPU 102 to switch the output port P1 to "high" to supply the power to the solenoid 134, thereby turning off the power-supply switch 133.

As described above, according to the present embodiment, in case of performing the automatic off driving by the power-supply switch having the mechanical relay, the automatic off driving of the power-supply switch is performed in the normal state maintained. Then, when the number of times of off/on of the power-supply switch has gotten close to the number of times affecting the lifetime of the power-supply switch, it is controlled to perform the automatic off driving after transitioning the power state to the automatic off driving state of reducing the resistance load of the power-supply switch. By the above operation, it is possible in the present embodiment to perform the automatic off driving faster than the case of performing the automatic off driving surely after transitioning the power state from the normal state to the automatic off driving state. Further, as long as the number of times of off/on of the power-supply switch is small, it is possible to frequently perform the automatic off driving, whereby it is possible to achieve the power saving of the image forming apparatus by the automatic off driving.

Moreover, according to the present embodiment, it is possible to extend the lifetime of the power-supply switch while using the conventional power-supply switch as the switch itself. Consequently, it is unnecessary to use the power-supply switch for which the number of times of off/on has been ensured according to the user who uses the image forming apparatus frequently. Thus, it is possible to prevent that the costs of the power-supply switch itself increase, and it is also possible to prevent that the increased size of the power-supply switch affects the overall constitution of the image forming apparatus itself.

Incidentally, although the above embodiments are applied to the image forming apparatus, the present invention is also applicable to any electronic device if it can operate in a plurality of power states.

Incidentally, the structures and the contents of the above various kinds of data are not limited to those described above. Namely, it is needless to say that the above various kinds of data can include various kinds of structures and contents according to their intended purposes and objects.

Although the exemplary embodiments of the present invention have been described as above, it should be noted that the present invention can adopt an embodiment which is recognized as, e.g., a system, an apparatus, a method, a program, or a recording medium. More specifically, the present invention may be applied to a system which is composed of a plurality of devices or to an apparatus which includes only one device.

Incidentally, it should be noted that the constitution obtained by properly combining the above embodiments is also included in the present invention. As described above, according to the present invention, it is possible to perform the excellent power supply controlling for the image forming apparatus having the plurality of power states, in consideration of the limitation of the number of times of off/on of the power-supply switch.

### Other Embodiments

Also, the present invention is realized by performing the following process in which software (program) for achieving the functions of the above embodiments is supplied to a system or an apparatus via a network or various kinds of storage media and the supplied software is read and actually executed by a computer (or a CPU or an MPU) of the system or the apparatus.

Further, the present invention may be applied to a system composed of a plurality of devices or an apparatus having a single device.

Aspects of the present invention can also be realized by a computer of a system or apparatus (or devices such as a CPU or an MPU) that reads out and executes a program recorded on a memory device to perform the functions of the above embodiments, and by a method, the steps of which are performed by a computer of a system or an apparatus by, for example, reading out and executing a program recorded on a memory device to perform the functions of the above embodiments. For this purpose, the program is provided to the computer for example via a network or from a recording medium of various types serving as the memory device (e.g., computer-readable medium).

While the present invention has been described with reference to the exemplary embodiments, it is to be understood that the invention is not limited to the disclosed exemplary embodiments, i.e. they can be modified according to the scope of the present invention as defined by the following claims.

## Claims

1. An image forming apparatus (1) which can operate in a plurality of power states, comprising:
a controlling unit (10) configured to transition the power state of the image forming apparatus (1) to a first power state, a second power state which can be returned to the first power state in response to a return instruction, or a third power state of which power is saved as compared with power of the second power state; and
a power-supply switch (133) configured to cut off power supply to the image forming apparatus (1) by being turned off by an internal mechanical relay (134, 135, 136) driven by controlling from the controlling unit (10),
wherein, according to a length of time (Tsh) for which no operation is performed by a user in the second power state, the controlling unit (10) controls to turn off the power-supply switch (133) by controlling driving of the internal mechanical relay (134, 135, 136) in the third power state transitioned from the second power state.

2. The image forming apparatus (1) according to claim 1, further comprising an operation unit (14) configured to accept an operation from the user,
wherein the controlling unit (10) controls to stop power supply to the operation unit (14) in case of transitioning the power state of the image forming apparatus (1) from the second power state to the third power state.

3. The image forming apparatus (1) according to claim 2, wherein the controlling unit (10) controls to stop the power supply to the operation unit (14) in a case where there is no operation of the user from the operation unit (14) for a given time.

4. The image forming apparatus (1) according to any one of claims 1 to 3, further comprising a counting unit (102) configured to count the number of times of turning off the power-supply switch (133),
wherein the controlling unit (10) controls not to turn off the power-supply switch (133) in a case where the number of times counted by the counting unit (102) exceeds a first number of times.

5. The image forming apparatus (1) according to claim 4, wherein the first number of times is the number of times based on the number of times of off/on defined as a lifetime of the power-supply switch (133).

6. The image forming apparatus (1) according to claim 4 or 5, wherein, in a case where the power-supply switch (133) is turned off by the manual operation, the counting unit (102) counts up the number of times of turning off the power-supply switch (133), and, in a case where the power-supply switch (133) is turned off by a second number of times under the control of the controlling unit (10), the counting unit (102) counts up the number of times of turning off the power-supply switch.

7. The image forming apparatus (1) according to claim 6, wherein the second number of times is the number of times based on a ratio of the number of times of off/on being the lifetime of the power-supply switch (133) in a predetermined power state to the number of times of off/on being the lifetime of the power-supply switch (133) in a normal power state.

8. A controlling method for an image forming apparatus (1) which can operate in a plurality of power states, the controlling method comprising:
transitioning the power state of the image forming apparatus (1) from a first power state to a second power state which can be returned to the first power state in response to a return instruction;
transitioning the power state of the image forming apparatus (1) from the second power state to a third power state of which power is saved as compared with power of the second power state; and
cutting off power supply to the image forming apparatus (1) by turning off an internal mechanical relay (134, 135, 136) driven by controlling from a controlling unit (10),
wherein, according to a length of time (Tsh) for which no operation is performed by a user in the second power state, it is controlled to turn off a power-supply switch (133) by controlling driving of the internal mechanical relay (134, 135, 136) in the third power state transitioned from the second power state.

9. A computer-readable storage medium storing a computer-executable instructions to cause a computer to execute the controlling method according to claim 8.

## Patentansprüche

1. Bilderzeugungsgerät (1), das in einer Vielzahl von Energiezuständen betrieben werden kann, mit:
einer Steuerungseinheit (10), die gestaltet ist, um den Energiezustand des Bilderzeugungsgeräts (1) in einen ersten Energiezustand, einen zweiten Energiezustand, der in den ersten Energiezustand in Erwiderung auf eine Rückstellanweisung zurückgestellt werden kann, oder einen dritten Energiezustand zu stellen, bei dem Energie gespart wird verglichen zu der Energie des zweiten Energiezustands; und
einem Energieversorgungsschalter (113), der gestaltet ist, um eine Energieversorgung zu dem Bilderzeugungsgerät (1) abzuschalten, indem sie durch ein internes mechanisches Relais (134, 135, 136), das durch Steuern von der Steuerungseinheit (10) angetrieben wird, ausgeschaltet wird,
wobei gemäß einer Zeitdauer (Tsh), in der kein Betrieb durch einen Anwender in dem zweiten Energiezustand ausgeführt wird, die Steuerungseinheit (10) ein Ausschalten des Energieversorgungsschalters (133) durch Steuern eines Antriebs des internen mechanischen Relais (134, 135, 136) in dem dritten Energiezustand steuert, der von dem zweiten Energiezustand übergestellt wurde.

2. Bilderzeugungsgerät (1) nach Anspruch 1, das des Weiteren eine Betriebseinheit (14) aufweist, die gestaltet ist, um einen Betrieb von dem Anwender zu akzeptieren,
wobei die Steuerungseinheit (10) ein Stoppen einer Energieversorgung zu der Betriebseinheit (14) in einem Fall steuert, in dem der Energiezustand des Bilderzeugungsgeräts (1) von dem zweiten Energiezustand in den dritten Energiezustand gestellt wird.

3. Bilderzeugungsgerät (1) nach Anspruch 2, wobei die Steuerungseinheit (10) ein Stoppen der Energieversorgung zu der Betriebseinheit (14) in einem Fall steuert, in dem es keinen Betrieb des Anwenders von der Betriebseinheit (14) für eine vorgegebene Zeit gibt.

4. Bilderzeugungsgerät (1) nach einem der Ansprüche 1 bis 3, das des Weiteren eine Zähleinheit (102) aufweist, die gestaltet ist, um die Anzahl von Malen des Ausschaltens des Energieversorgungsschalters (133) zu zählen,
wobei die Steuerungseinheit (10) ein Nichtausschalten des Energieversorgungsschalters (133) in einem Fall steuert, in dem die Anzahl von Malen, die durch die Zähleinheit (102) gezählt wird, eine erste Anzahl von Malen überschreitet.

5. Bilderzeugungsgerät (1) nach Anspruch 4, wobei die erste Anzahl von Malen die Anzahl von Malen ist, die auf der Anzahl von Malen von Aus/Ein basiert, die als eine Lebensdauer des Energieversorgungsschalters (133) definiert ist.

6. Bilderzeugungsgerät (1) nach Anspruch 4 oder 5, wobei in einem Fall, in dem der Energieversorgungsschalter (133) durch den manuellen Betrieb ausgeschaltet wird, die Zähleinheit (102) die Anzahl von Malen des Ausschaltens des Energieversorgungsschalters (133) hochzählt, und in einem Fall, in dem der Energieversorgungsschalter (133) mit einer zweiten Anzahl von Malen gemäß der Steuerung der Steuerungseinheit (10) ausgeschaltet wird, die Zähleinheit (102) die Anzahl von Malen des Ausschaltens des Energieversorgungsschalters hochzählt.

7. Bilderzeugungsgerät (1) nach Anspruch 6, wobei die zweite Anzahl von Malen die Anzahl von Malen ist, die auf einem Verhältnis der Anzahl von Malen von Aus/Ein, die die Lebensdauer des Energieversorgungsschalters (133) in einem vorbestimmten Energiezustand ist, zu der Anzahl von Malen von Aus/Ein basiert, die die Lebensdauer des Energieversorgungsschalters (133) in einem normalen Energiezustand ist.

8. Steuerungsverfahren für ein Bilderzeugungsgerät (1), das in einer Vielzahl von Energiezuständen betrieben werden kann, wobei das Steuerungsverfahren Folgendes aufweist:
Stellen des Energiezustands des Bilderzeugungsgeräts (1) von einem ersten Energiezustand in einen zweiten Energiezustand, der in den ersten Energiezustand in Erwiderung auf eine Rückstellanweisung zurückgestellt werden kann;
Stellen des Energiezustands des Bilderzeugungsgeräts (1) von dem zweiten Energiezustand in einen dritten Energiezustand, bei dem Energie gespart wird verglichen zu der Energie des zweiten Energiezustands; und
Abschalten einer Energieversorgung zu dem Bilderzeugungsgerät (1) durch Ausschalten eines internen mechanischen Relais (134, 135, 136), das durch Steuern von einer Steuerungseinheit (10) angetrieben wird,
wobei gemäß einer Zeitdauer (Tsh), in der kein Betrieb durch einen Anwender in dem zweiten Energiezustand ausgeführt wird, ein Ausschalten des Energieversorgungsschalters (133) durch Steuern eines Antriebs des internen mechanischen Relais (134, 135, 136) in dem dritten Energiezustand gesteuert wird, der von dem zweiten Energiezustand übergestellt wurde.

9. Computerlesbares Speichermedium, das computerausführbare Anweisungen speichert, um zu bewirken, dass ein Computer das Steuerungsverfahren nach Anspruch 8 ausführt.

## Revendications

1. Appareil de formation d'image (1) qui peut fonctionner dans une pluralité d'états de puissance, comprenant :
une unité de commande (10) configurée pour faire passer l'état de puissance de l'appareil de formation d'image (1) à un premier état de puissance, à un deuxième état de puissance qui peut être ramené au premier état de puissance en réponse à une instruction de retour, ou à un troisième état de puissance économisant de la puissance par comparaison avec la puissance consommée dans le deuxième état de puissance ; et
un commutateur d'alimentation en puissance (133) configuré pour couper l'alimentation en puissance de l'appareil de formation d'image (1) par passage d'un relais mécanique interne (134, 135, 136) attaqué par une commande provenant de l'unité de commande (10) à un état non excité,
dans lequel, conformément à la durée (Tsh) pendant laquelle aucune opération n'est effectuée par un utilisateur dans le deuxième état de puissance, l'unité de commande (10) effectue une commande ayant pour objet de faire passer le commutateur d'alimentation en puissance (133) à l'état hors circuit par une commande d'attaque du relais mécanique interne (134, 135, 136) dans le troisième état de puissance après passage de l'état de puissance du deuxième état de puissance.

2. Appareil de formation d'image (1) selon la revendication 1, comprenant en outre une unité d'exploitation (14) configurée pour accepter une opération de l'utilisateur,
dans lequel l'unité de commande (10) commande une coupure de l'alimentation en puissance de l'unité d'exploitation (14) dans un cas de passage de l'état de puissance de l'appareil de formation d'image (1) du deuxième état de puissance au troisième état de puissance.

3. Appareil de formation d'image (1) selon la revendication 2, dans lequel l'unité de commande (10) commande une coupure de l'alimentation en puissance de l'unité d'exploitation (14) dans un cas dans lequel aucune opération n'est effectuée par l'utilisateur à partir de l'unité d'exploitation (14) pendant un temps donné.

4. Appareil de formation d'image (1) selon l'une quelconque des revendications 1 à 3, comprenant en outre une unité de comptage (102) configurée pour compter le nombre de mises à l'état hors circuit du commutateur d'alimentation en puissance (133),
dans lequel l'unité de commande (10) commande de ne pas mettre à l'état hors circuit le commutateur d'alimentation en puissance (133) dans un cas dans lequel le nombre de fois compté par l'unité de comptage (102) dépasse un premier nombre de fois.

5. Appareil de formation d'image (1) selon la revendication 4, dans lequel le premier nombre de fois correspond au nombre de fois basé sur le nombre de passages à l'état hors circuit/en circuit défini comme durée de vie du commutateur d'alimentation en puissance (133).

6. Appareil de formation d'image (1) selon la revendication 4 ou 5, dans lequel, dans un cas dans lequel le commutateur d'alimentation en puissance (133) est mis dans l'état hors circuit par l'opération manuelle, l'unité de comptage (102) compte, en l'incrémentant, le nombre de passages à l'état hors circuit du commutateur d'alimentation en puissance (133) et, dans un cas dans lequel le commutateur d'alimentation en puissance (133) est mis à l'état hors circuit un second nombre de fois sous la commande de l'unité de commande (10), l'unité de comptage (102) compte, en l'incrémentant, le nombre de passages à l'état hors circuit du commutateur d'alimentation en puissance.

7. Appareil de formation d'image (1) selon la revendication 6, dans lequel le second nombre de fois correspond au nombre de fois basé sur un rapport du nombre de passages à l'état hors circuit/en circuit qui correspond à la durée de vie du commutateur d'alimentation en puissance (133) dans un état de puissance prédéterminé au nombre de passages à l'état hors circuit/en circuit qui correspond à la durée de vie du commutateur d'alimentation en puissance (133) dans un état de puissance normal.

8. Procédé de commande d'un appareil de formation d'image (1) qui peut fonctionner dans une pluralité d'états de puissance, le procédé de commande comprenant les étapes consistant à :
faire passer l'état de puissance de l'appareil de formation d'image (1) d'un premier état de puissance à un deuxième état de puissance qui peut être ramené dans le premier état de puissance en réponse à une instruction de retour ;
faire passer l'état de puissance de l'appareil de formation d'image (1) du deuxième état de puissance à un troisième état de puissance permettant d'économiser de la puissance par comparaison avec la puissance consommée dans le deuxième état de puissance ; et
couper l'alimentation en puissance de l'appareil de formation d'image (1) par passage d'un relais mécanique interne (134, 135, 136) attaqué par une commande provenant d'une unité de commande (10) à un état non excité,
dans lequel, conformément à la durée (Tsh) pendant laquelle aucune opération n'est effectuée par un utilisateur dans le deuxième état de puissance, une commande est effectuée ayant pour objet de faire passer un commutateur d'alimentation en puissance (133) à l'état hors circuit par une commande d'attaque du relais mécanique interne (134, 135, 136) dans le troisième état de puissance après passage de l'état de puissance du deuxième état de puissance.

9. Support d'informations lisible par ordinateur contenant en mémoire des instructions exécutables par ordinateur ayant pour objet d'amener un ordinateur à exécuter le procédé de commande selon la revendication 8.
